# EUROPÄISCHE PATENTSCHRIFT

(11) **EP 2 185 382 B1**
(45) Veröffentlichungstag und Bekanntmachung des Hinweises auf die Patenterteilung: **18.04.2012**
(21) Anmeldenummer: 08787320.4
(22) Anmeldetag: 19.08.2008
(51) Int. Cl.: B60P 7/13

(54) **VORRICHTUNG ZUM SICHERN EINES CONTAINERS AUF EINER PLATTFORM EINES TRANSPORTFAHRZEUGS**
APPARATUS FOR SECURING A CONTAINER ON A PLATFORM OF A TRANSPORT VEHICLE
DISPOSITIF DE FIXATION D'UN CONTENEUR SUR LA PLATE-FORME D'UN VEHICULE DE TRANSPORT

(30) Priorität: 23.08.2007 DE 102007039780
(43) Veröffentlichungstag der Anmeldung: 19.05.2010
(73) Patentinhaber: Gottwald Port Technology GmbH, 40597 Düsseldorf (DE)
(72) Erfinder: FRANZEN, Hermann, 41238 Mönchengladbach (DE); WIESCHEMANN, Armin, 46119 Oberhausen (DE); MOUTSOKAPAS, Jannis, 40789 Monheim (DE)
(74) Vertreter: Moser, Jörg Michael
(86) Internationale Anmeldenummer: PCT/EP2008/060838
(87) Internationale Veröffentlichungsnummer: WO 2009/024569

(56) Entgegenhaltungen:
- CA-A1- 1 066 561
- GB-A- 2 172 248
- US-A- 3 603 267
- US-A- 4 234 278
- US-A- 5 395 190
- US-B1- 6 309 153
- US-B1- 6 533 511

## Beschreibung

Die Erfindung betrifft eine Vorrichtung zum Sichern eines Containers auf einer Plattform eines Transportfahrzeugs, insbesondere auf einer Hub-Plattform eines flurgebundenen und automatisch geführten Transportfahrzeuges, mit Sicherungselementen, die sich an der Plattform abstützen und für die Sicherung an dem Container anliegen.

Es ist allgemein bekannt, ISO-Container und/oder Wechselbehälter auf Transportfahrzeugen über sogenannte Twist-Locks zu befestigen. Hierfür sind an den Ecken der ISO-Container und/oder Wechselbehälter genormte Eckbeschläge, sogenannte Corner Castings, vorgesehen, in die ein Verriegelungselement des Twist-Locks zur Befestigung des ISO-Containers und/oder Wechselbehälters auf dem Transportfahrzeug einführbar und verdrehbar ist. Durch die Verdrehung des Veniegelungselements erfolgt eine formschlüssige Verbindung zwischen dem Eckbeschlag und dem Verriegelungselement. Ein derartiges Twist-Lock ist beispielsweise in der deutschen Offenlegungsschrift DE 196 06 263 A1 beschrieben. Die dortigen Twist-Locks sind an gegenüberliegenden Enden von Querträgern eines Sattelaufliegers befestigt Um zu vermeiden, dass die Twist-Locks in ihrer Ruhestellung in sperriger Weise über die Enden der Querträger hinausragen, sind diese um eine vertikale Achse einschwenkbar.

Auch ist aus dem europäischen Patent EP 0 996 562 B1 eine weitere Verriegelungsvorrichtung bekannt, mit der ISO-Container auf einem Eisenbahnwaggon befestigt werden können. Diese Verriegelungsvorrichtung besteht im Wesentlichen aus einem im Bereich der Stirnseite eines ISO-Containers aufschwenkbaren Anschlagelements, das über einen gestreckten Kniehebel in einer vertikalen Position gehalten wird. In dieser vertikalen Position liegt das Anschlagelement an der Stirnseite an und kann somit ein Verrutschen des ISO-Containers in dessen Längsrichtung auf dem Eisenbahnwaggon verhindern. Um ein Abheben des ISO-Containers von dem Eisenbahnwaggon zu verhindern, ist an dem dem Eisenbahnwaggon abgewandten Ende des Anschlagelements ein Stift angeordnet, der in eine Aussparung in der Stirnseite des Eisenbahnwaggons eingreift. Außerdem ist das Anschlagelement aus seiner vertikalen Verriegelungsposition in eine horizontale Ruheposition verschwenkbar, in der es flach auf der Ladefläche des Eisenbahnwaggons ruht und ein Verschwenken eines leicht angehobenen ISO-Containers im Bereich des Eisenbahnwaggons nicht behindert. In seiner vertikalen Verriegelungsposition liegt das Anschlagelement und dessen Stift im Bereich der Eckbeschläge des ISO-Containers an dessen Stirnseite an.

Des Weiteren ist aus dem deutschen Patent DE 43 34 255 C2 eine Vorrichtung zum Festlegen eines Gegenstandes auf einer bewegbaren Platte, insbesondere eines Frachtcontainers auf einer Ladefläche eines Schienen- oder Straßenfahrzeuges, bekannt, die mehrere an der Ladefläche verteilt angeordnete Sicherungselemente aufweist. Diese Sicherungselemente sind um eine in Längsrichtung des Fahrzeuges gerichtete und horizontale Achse schwenkbar. Das Sicherungselement ist im Wesentlichen c-förmig ausgebildet und weist ein erstes ösenförmiges Element und ein zweites hakenförmiges Element auf. Wird ein Container auf einer Ladefläche des Fahrzeuges abgestellt, so wird von der Unterseite des Containers die Hülse in die Ladefläche hineingedrückt. Hierdurch wird das gesamte Sicherungselement um deren Achse bewegt und somit verschwenkt das der Hülse gegenüberliegende hakenförmige gebogene Teil des Sicherungselementes in Richtung einer Seitenwand des Containers verschwenkt. Das hakenförmige Teil legt sich dann an einem aus der Seitenwand seitlich hervorragenden Vorsprung des Containers an. Von diesen Sicherungselementen sind an den Längsseiten der Plattform des Transportfahrzeuges mehrere angeordnet um somit ein auf dem Transportfahrzeug abgestellten Container seitlich zu verriegeln.

Ferner ist aus der europäischen Patentschrift EP 0 302 569 B1 bereits ein System zum Be- und Entladen eines Schiffes mit Containern bekannt. Dieses System umfasst mindestens einen Kaikran zum Be- und Entladen der an einem Kai festgemachten Container-Schiffe. Mittels der Kaikrane werden die Container von einem Transportfahrzeug aufgenommen beziehungsweise werden die Container auf diesem Transportfahrzeug abgestellt. Dieses Transportfahrzeug ist auf dem Kai ohne Verwendung von Schienen verfahrbar und wird von einer Steuerung automatisch geführt. Der Container wird von dem Transportfahrzeug an einer stationären Übergabestation von dem Transportfahrzeug abgeladen beziehungsweise von dem Transportfahrzeug aufgenommen. Diese Übergabestation besteht im Wesentlichen aus ortsfesten Tragtischen, auf die die Container abgestellt beziehungsweise von denen die Container aufgenommen werden. Diese Tragtische sind tragarmförmig ausgebildet und unterstützen den Container im Bereich ihrer Längsseiten von unten. Entsprechend ist der Abstand der gegenüberliegenden Tragtische schmaler als die Breite der Container ausgeführt. Um den Container von dem Tragtisch aufnehmen beziehungsweise hierauf abstellen zu können, ist vorgesehen, dass das Transportfahrzeug eine Plattform für den Transport der Container aufweist und entweder das Transportfahrzeug insgesamt oder nur dessen Plattform zur Übernahme eines Containers angehoben wird, dann das Transportfahrzeug mit dem nunmehr auf dessen Plattform ruhenden Container aus dem Bereich der Tragtische herausfährt. Bei Verwendung einer heb- und senkbaren Plattform ist noch für die Weiterfahrt des Transportfahrzeuges die Plattform abzusenken. Das Abstellen der Container auf dem Tragtisch erfolgt hierbei in entgegen gesetzter Reihenfolge. Damit das Transportfahrzeug die Container von der Übergabestation aufnehmen kann, weist der Hubtisch eine Breite auf, die geringer ist als der Abstand zwischen den gegenüberliegenden Tragtischen. Ob der Container auf der Plattform des Transportfahrzeuges zusätzlich gehalten wird, ist nicht beschrieben.
Weitere Vorriegelungsvorrichtungen sind von US6309153 sowie US5395190 bekannt.

Ausgehend von diesem Stand der Technik liegt der vorliegenden Erfindung die Aufgabe zugrunde, ein Vorrichtung zum Sichern eines Containers auf einer Plattform eines Transportfahrzeugs, insbesondere auf einer Hub-Plattform eines flurgebundenen und automatisch geführten Transportfahrzeuges, mit Sicherungselementen, zu schaffen, die sich durch eine einfache und sichere Bauweise auszeichnet.

Diese Aufgabe wird durch eine Vorrichtung zum Sichern eines Containers auf einer Plattform eines Transportfahrzeugs mit einem automatisch geführten Fahrzeug für Container mit den Merkmalen des Anspruchs 1 gelöst. Vorteilhafte Ausgestaltungen der Erfindung sind in den Unteransprüchen 2 bis 15 angegeben.

Erfindungsgemäß wird bei einer Vorrichtung zum Sichern eines Containers auf einer Plattform eines Transportfahrzeugs, insbesondere auf einer Hub-Plattform eines flurgebundenen und automatisch geführten Transportfahrzeuges, mit Sicherungselementen, die sich an der Plattform abstützen und für die Sicherung an dem Container anliegen, eine einfache und sichere Bauweise dadurch erreicht, dass eine Vielzahl von Sicherungselementen derart beweglich an der Plattform angeordnet sind, dass je nach Position und Art eines auf der Plattform abgestellten Containers eine erste Gruppe der Vielzahl der Sicherungselemente von dem Container in eine Passivstellung bewegt werden und eine zweite Gruppe der Vielzahl der Sicherungselemente von dem Container in eine Betriebstellung bewegt wird oder in der Betriebstellung verbleibt, in der die zweite Gruppe der Sicherungselemente den Container gegen Herunterrutschen von der Plattform sichert. Die Vielzahl von Sicherungselementen ermöglichen, dass die Sicherung des auf der Plattform abgestellten Containers automatisch erfolgt, auch wenn die innerhalb einer bekannten Anzahl von Arten und Längen der Container diese wechseln. Die Sicherungselemente in der Passivstellung behindern den Lade- und Entladevorgang nicht.

Als konstruktiv besonders einfach erweist sich, dass die Sicherungselemente zwischen einer Betriebsstellung, einer Ruhestellung und einer Passivstellung schwenkbar an der Plattform gelagert sind und in der Passivstellung von einer Unterfläche des Containers, vorzugsweise bündig mit der Oberfläche der Plattform abschließend, in Richtung der Plattform geschwenkt sind.

Eine einfacher Wechsel zwischen den einzelnen Betriebsstellungen und sichere Aufnahme der Sicherungskräfte wird dadurch erreicht, dass die Sicherungselemente über Achsen schwenkbar an der Plattform gelagert und die Achsen in Längsrichtung der Plattform und parallel zu sowie unterhalb der Oberfläche der Plattform angeordnet sind.

Eine einfache Schwerkraftbetätigung der Sicherungselemente wird dadurch verwirklicht, dass die Sicherungselemente als Doppelhebel mit einem Sicherungsteil und einem Gewichtsteil ausgebildet sind, die in der Mitte an den Achsen gelagert sind. Hierbei sind die Gewichtsteile derart dimensioniert sind, dass in einer Ruhestellung der Sicherungselemente, in der kein Container auf der Plattform abgestellt ist, die Sicherungselemente mit einem Teil seines Sicherungsteils aus der Oberfläche der Plattform in Richtung eines hierauf abzustellenden Containers hinausragen. Somit entfällt eine aufwendige mechanische oder manuelle Betätigung der Sicherungselemente.

Um den Container sich auf der Plattform halten zu können, sind die Sicherungselemente als Seiten-Sicherungselemente und Längs-Sicherungselemente ausgebildet. Hierbei kommen die Längs-Sicherungselemente in ihrer Betriebstellung an einer Stirnseite eines in Längsrichtung der Plattform verrutschten Container zur Anlage und die Seiten-Sicherungselemente in ihrer Betriebstellung an einer Innenseite eines Eckbeschlages eines quer zur Längsrichtung der Plattform verrutschten Container zur Anlage.

Konstruktiv einfach ist, dass die Längs-Sicherungselemente leistenartig mit einer Spitze ausgebildet sind.

Besonders vorteilhaft, einfach und sicher ist, dass die Seiten-Sicherungselemente leistenartig ausgebildet sind und an ihren der Achse abgewandten Ende eine Kante aufweisen, die in der Betriebsstellung der Seiten-Sicherungselemente seitlich leicht aus der Plattform und auf der Höhe der Oberfläche der Plattform heraus steht. Die Kante kann die Haltekräfte zwischen dem Eckbeschlag und der Plattform sicher übertragen.

In bevorzugter Ausgestaltung ist vorgesehen, dass das Sicherungsteil in Richtung der Achse gesehen eine parallelogrammartige Form aufweist, deren dem abzustellenden Container zugewandte Längseite und die der Achse abgewandte Stirnseite stumpfwinklig aufeinander zulaufen und die Kante ausbilden.

Vorzugsweise ist vorgesehen, dass die Seiten-Sicherungselemente in mehren Gruppen derart auf der Plattform verteilt sind, dass Container verschiedener Größen jeweils im Bereich ihrer Eckbeschläge sicherbar sind. Die Container werden so weiterhin an den stabilen Eckbeschlägen gesichert jedoch außerhalb der sonst verwendeten normierten Öffnungen der Eckbeschläge.

Die Sicherheit wird dadurch erhöht, dass die Seiten-Sicherungselemente redundant als Paar in Bezug auf einen zu sichernden Eckbeschlag auf der Plattform angeordnet sind.

Die Vorrichtung zum Sichern wird vielseitig einsetzbar dadurch, dass die Längs-Sicherungselemente in mehren Gruppen derart auf der Plattform verteilt sind, dass Container verschiedener Größen jeweils im Bereich ihrer Stirnseiten sicherbar sind.

Es ist ausreichend, dass im Bereich der Stirnfläche der Plattform starre End-Sicherungselemente anstatt der Längs-Sicherungselemente angeordnet sind.

Für den Fall, dass die Plattform in deren Längsrichtung in zwei Plattformen geteilt ist, sind die Sicherungselemente zueinander spiegelverkehrt auf den jeweiligen Plattformen angeordnet.

Die zuvor beschriebenen Seiten-Sicherungselemente eignen sich besonders, wenn die Breite der Plattform geringer als die Breite des Containers ist. Dann können die Eckbeschläge mit ihren normierten Öffnungen nicht zur Sicherung verwendet werden.

Nachfolgend wird die Erfindung anhand eines, in einer Zeichnung dargestellten, Ausführungsbeispiels näher erläutert. Es zeigen:
Figur 1 eine perspektivische Ansicht eines automatisch geführten Fahrzeuges in einer Übergabestation,
Figur 2 eine Vorderansicht von Figur 1, bei der der Hubtisch des Fahrzeuges angehoben ist,
Figur 3 eine Seitenansicht eines Hubtisches in der angehobenen Stellung,
Figur 4 eine Draufsicht auf einen Hubtisch eines Fahrzeuges gemäß Figur 1,
Figur 5 eine Ausschnittsvergrößerung von Figur 2 aus dem Bereich eines Hubtisches und eines Containers,
Figur 6 eine Ausschnittsvergrößerung von Figur 5 aus dem Bereich einer Ecke eines Hubtisches,
Figur 7 eine Seitenansicht eines Endbereichs eines 45-Fuß-Containers auf einem Hubtisch und
Figur 8 eine Schnittansicht von Figur 7 entlang der Schnittlinie A-A.

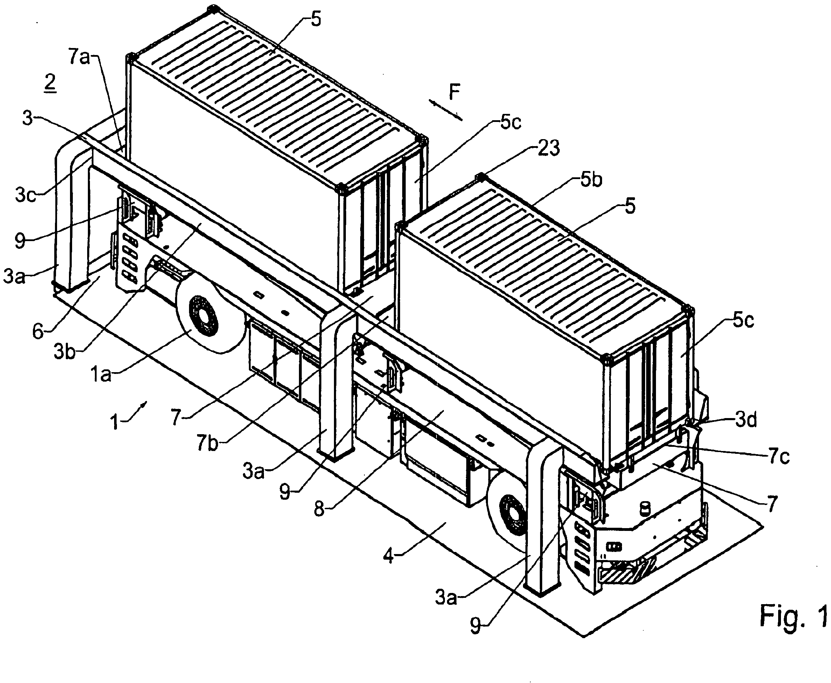

Die Figur 1 zeigt eine perspektivische Ansicht eines automatisch geführten Fahrzeuges 1 innerhalb einer Übergabestation 2. Eine derartige Übergabestation 2 kann als Schnittstelle zwischen den automatisch geführten Fahrzeugen 1 und einem anderen Transportmittel wie beispielsweise einem Portalkran mit einem Spreader-Rahmen als Lastaufnahmemittel oder einem üblicherweise als Straddle-Carrier bezeichneten hochbeinigen und bemannten Container-Transportfahrzeug dienen.

Die Übergabestation 2 besteht im Wesentlichen aus einem stationären Traggestell 3, das aus Beinen 3a in Form von vertikalen Pfosten und hieran befestigten Tragschienen 3b besteht. Die Beine 3a ruhen an ihrem unteren Ende auf einem Boden 4, der üblicherweise im Hafenbereich Bestandteil eines Kais ist. An ihrem dem Boden 4 abgewandten Ende sind die Beine 3a leicht nach innen abgewinkelt, so dass diese in Fahrtrichtung F des Fahrzeugs gesehen leicht L-förmig aussehen. An der sich somit im Wesentlichen vertikal erstreckenden oberen Endfläche 3c der Beine 3a ist dann die Tragschiene 3b befestigt. Insgesamt sind sechs Beine 3a vorgesehen, von denen jeweils in Fahrtrichtung F gesehen rechts und links jeweils drei Beine mit Abstand untereinander und zu dem in die Übergabestation 2 eingefahrenen Fahrzeug 1 angeordnet sind. Die rechten und linken Beine 3a sind auch jeweils gegenüberliegend angeordnet. Der Abstand a zwischen zwei gegenüberliegend angeordneten Beinen 3a ist, um ein Einfahren des Fahrzeuges 1 zu ermöglichen, größer als die Breite b des Fahrzeuges 1 gewählt. Hierbei ist der Abstand a etwa 100mm größer als die Breite b. Die jeweils an den Endflächen 3c der Beine 3a befestigten und gegenüberliegenden Tragschienen 3b weisen in Fahrtrichtung F gesehen einen L-förmigen Querschnitt auf, wobei deren langer Schenkel an den Endflächen 3c der Beine 3a befestigt ist und der kurze Schenkel eine horizontale und nach innen weisende Tragfläche 3d für den hierauf abzustellenden Container 5 bildet. Die Container 5 ruhen mit ihren stabilen und vorzugsweise in den unteren Ecken angeordneten Eckbeschlägen 23 und ihren dazwischen liegenden unteren Längsseiten 5b auf den Tragflächen 3d der Tragschiene 3b, wenn sie von dem Fahrzeug 1 oder einem anderen Transportmittel dort abgestellt worden sind.

Für das Abstellen der Container 5 auf den Tragflächen 3d beziehungsweise für das Aufnehmen der Container 5 von den Tragflächen 3d weist das Fahrzeug 1 einen Hubtisch 7 auf, der relativ zu einem Fahrzeugrahmen 8 des Fahrzeuges 1 vertikal anhebbar und absenkbar ist. Die Hubhöhe des Hubtisches 7 beträgt etwa 600mm. In der Figur 1 ist zu entnehmen, dass auf dem Fahrzeugrahmen 8 in Fahrtrichtung F des Fahrzeuges 1 gesehen hintereinander ein erster Hubtisch 7a und ein zweiter Hubtisch 7b angeordnet sind. Die Länge eines einzelnen Hubtisches 7a, 7b ist so gewählt, dass hierauf ein 20-Fuß-Container 5 transportiert werden kann. Auch ergänzen sich der erste Hubtisch 7a und der zweite Hubtisch 7b, für den Fall, dass sie synchron angehoben und abgesenkt werden, zu einem großen Hubtisch auf dem 40-Fuß-Container und auch 45-Fuß-Container transportiert werden können.

In der Figur 1 ist das Fahrzeug 1 gerade in die Übergabestation 2 eingefahren. Dies erfolgt üblicherweise im Automatikbetrieb, so dass der Einfahrkanal 6 mit der Breite a zwischen den gegenüberliegenden Beinen 3a des Traggestells 3 auch nur geringfügig größer sein muss als die Breite b des Fahrzeuges 1. Vor der Einfahrt des Fahrzeuges 1 in die Übergabestation 2 wurde das Fahrzeug 2 kurz angehalten um den ersten Hubtisch 7a und den zweiten Hubtisch 7b mit den jeweiligen Containern 5 jeweils aus ihrer unteren Transportstellung in ihre obere Hubstellung anzuheben. In dieser Hubstellung ragt die Hubfläche 7c der jeweiligen Hubtische 7a, 7b, auf der der Container 5 ruht, über die sich vertikal nach innen erstreckenden Tragflächen 3d der Tragschienen 3b hinaus. Die Hubtische 7a, 7b weisen in Fahrtrichtung F gesehen eine geringere Breite c als der Abstand d zwischen den Tragflächen 3d der gegenüberliegenden Beine 3a des Traggestells 3 auf. Somit kann das Fahrzeug 1 mit in der Hubstellung angehobenen Hubtischen 7a, 7b in die Übergabestation 2 einfahren, ohne das der Hubtisch 7a, 7b in Kontakt zu den Tragschienen 3b gerät. Auch befindet sich die Hubfläche 7c der Hubtische 7a, 7b oberhalb der Tragflächen 3d, so dass beim Einfahren des Fahrzeuges 1 in die Übergabestation 2 die Unterfläche 5a des Containers 5, insbesondere deren Befestigungselemente 23, sich oberhalb der Tragflächen 3d befindet. Wenn das Fahrzeug 1 seine gewünschte Einfahrttiefe in die Übergabestation 2 erreicht hat, werden die Hubtische 7a, 7b in ihre Transportstellung abgesenkt und der Container 5 wird mit seinen Ecken 23 und seiner Längsseite 5b auf den Tragflächen 3d der Tragschiene 3b abgestellt. Anschließend kann das Fahrzeug 1 die Übergabestation 2 mit ihren abgesenkten Hubtischen 7a, 7b unter Zurücklassen der Container 5 auf dem Traggestell 3 wieder verlassen.

Um ein Absetzen der Container 5 auf den ersten Hubtisch 7a und den zweiten Hubtisch 7b zu erleichtern, die sich hierfür jeweils in ihrer unteren Transportstellung befinden, sind auf dem Fahrzeugrahmen 8 des Fahrzeuges 1 in Fahrtrichtung F des Fahrzeuges 1 gesehen rechts und links neben den Hubtischen 7a, 7b jeweils in deren Anfangs- und Endbereichen trichterartige Führungselemente 9 vorgesehen. Diese Führungselemente 9 weisen eine nach innen zu den Hubtischen 7a, 7b gerichtete Führungsfläche 9a auf, die sich ausgehend von dem Fahrzeugrahmen 8 nach oben erweitert und somit einen Container 5 beim Absenken auf die Hubtische 7a, 7b in Richtung auf den Hubtisch 7a, 7b seitlich ausrichtet.

Auch ist aus der Figur 1 zu ersehen, dass das Fahrzeug 1 kein Schienenfahrzeug sondern ein Fahrzeug 1 mit Reifen 1 a ist.

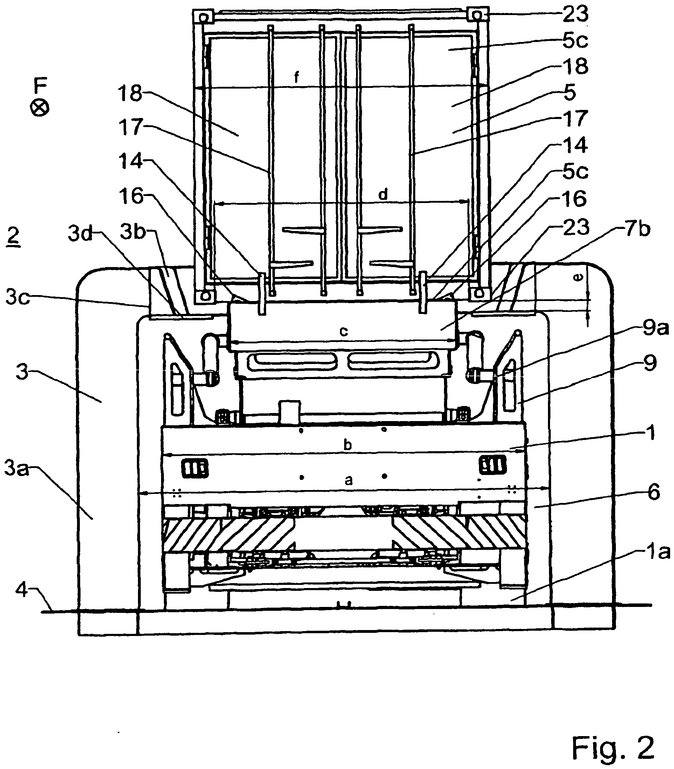

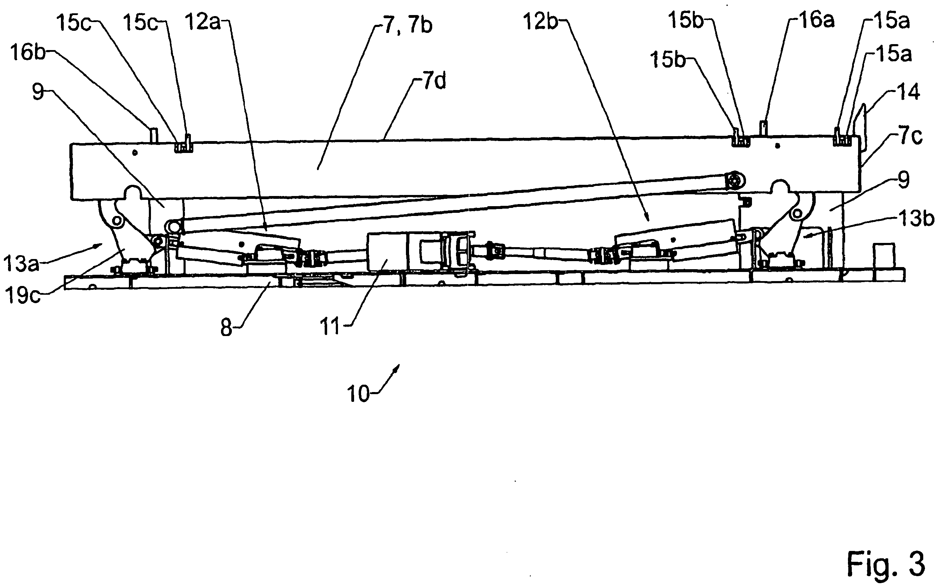

Die Figur 2 zeigt eine Vorderansicht von Figur 1 in Fahrtrichtung F des Fahrzeugs 1 in der Übergabestation 2. Der in dieser Figur 3 erkennbare Container 5 und der zweite Hubtisch 7b befinden sich in der angehobenen Hubstellung, wie es auch in der Figur 1 gezeigt ist. Es ist erkennbar, dass die Eckbeschläge 23 des Containers 5 sich mit einem Abstand e oberhalb der Tragflächen 3d der Tragschienen 3b befinden. Dieser Abstand e kann zwischen 50 und 150mm variieren je nach Ladungszustand des Containers 5 und Fülldruck der Reifen 1 a.

Auch ist deutlich zu erkennen, dass der Container 5 eine Breite f aufweist, die auf beiden Seiten den Hubtisch 7, 7b mit seiner Breite c überragt. Um den Container 5 in der angehobenen Hubstellung sicher auf dem Hubtisch 7, 7b gegen Verrutschen sichern zu können, sind an den Hubtischen 7, 7b verschiedene Gruppen von Sicherungselementen 14, 15a, 15b, 15c und 16a, 16b angeordnet. Im Einzelnen handelt es sich hierbei um End-Sicherungselemente 14, Seiten-Sicherungselemente 15a, 15b, 15c und Längs-Sicherungselemente 16a, 16b, von denen die Seiten-Sicherungselemente 15a, 15b, 15c den Container 5 bei einem seitlichen Verrutschen auf dem Hubtisch 7, 7a, 7b aufhalten und die End-Sicherungselemente 14, sowie die Längs-Sicherungselemente 16a, 16b den Container 5 an einem Verrutschen in Fahrtrichtung F des Fahrzeuges 1 und somit in Längsrichtung des Containers 5 auf dem Hubtisch 7, 7a, 7b hindern.

In der Figur 2 sind zwei End-Sicherungselemente 14 und zwei Längs-Sicherungselemente 16a, 16b dargestellt. Hierbei ragen Längs-Sicherungselemente 16a, 16b aus dem Hubtisch 7 nach oben heraus und liegen an einer der beiden Stirnseiten 5c des Containers 5 im Bereich seiner Unterkante an. Die End-Sicherungselemente 14 sind an einer der beiden und zwar der äußeren Stirnfläche 7c des Hubtisches 7c angeordnet und stehen nicht in Kontakt mit dem Container 5. Die Seiten-Sicherungselemente 15a, 15b, 15c sind in der Figur 2 nicht zu erkennen.

Die Figur 3 zeigt eine Seitenansicht des zweiten Hubtisches 7b und des angrenzenden Fahrzeugrahmens 8. Der Hubtisch 7b befindet sich in seiner angehobenen Stellung. Das Heben und Senken des Hubtisches 7b erfolgt über einen Hubantrieb 10, der im Wesentlichen aus einem Antrieb 11, zwei Stellspindelantrieben 12a, 12b und zwei Kniehebeln 13a, 13b besteht. Grundsätzlich ist es auch möglich, andere Arten von Hubantrieben wie beispielsweise hydraulische Hubantriebe zu verwenden.

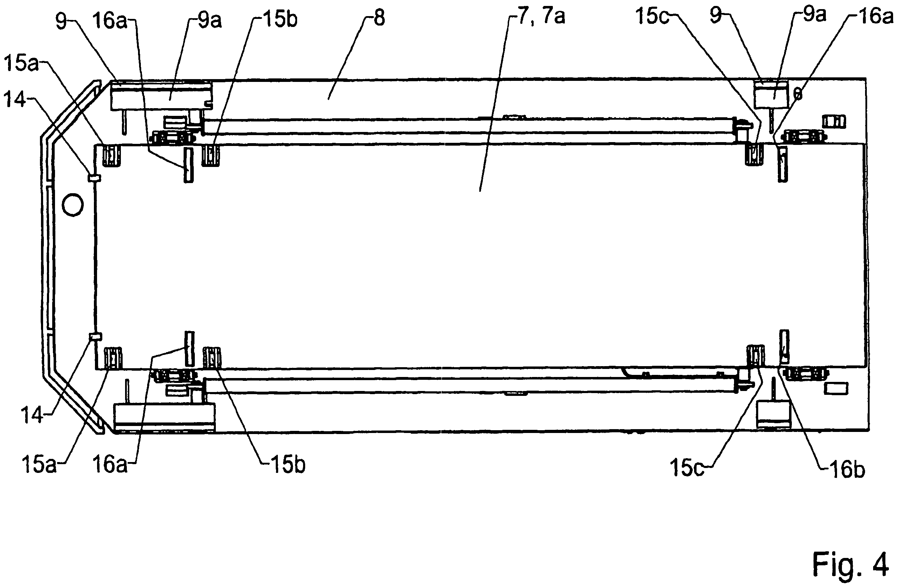

Außerdem ist der Figur 3 zu entnehmen, dass die End-Sicherungselemente 14, Seiten-Sicherungselemente 15a, 15b, 15c und Längs-Sicherungselemente 16a, 16b auf der Oberfläche 7d des Hubtisches 7b verteilt angeordnet sind, um die verschiedenen Längen von Containern 5 wie 20 Fuß, 40 Fuß und 45 Fuß sichern zu können. An der äußeren Stirnfläche 7c des Hubtisches 7b sind zwei End-Sicherungselemente 14 angeordnet, die starr mit der Stirnfläche 7c verbunden sind und sich aus der Oberfläche 7d des Hubtisches 7b heraus erstrecken. Quer zur Längserstreckung gesehen sind die End-Sicherungselemente 14 voneinander beabstandet und zu den Seiten des Hubtisches 7b versetzt angeordnet (siehe Figuren 2 und 4). Hierbei ist die Anordnung der End-Sicherungselemente 14 so gewählt, dass die an dem Container 5 vorhandenen Verriegelungselemente 17 für die Türen 18 des Containers 5 nicht zur Anlage an die End-Sicherungselemente 14 kommen. Des Weiteren sind die End-Sicherungselemente 14 nach oben erweitert in Hinblick auf einen auf den Hubtisch 7b abzustellenden Container 5 ausgebildet. Insgesamt sind die End-Sicherungselemente 14 als leistenförmige Profilstreben ausgebildet, die starr an dem Hubtisch 7b angeschweißt sind. An die starren End-Sicherungselemente 14 kommen die Stirnseiten von 20-Fuß-Containern 5 und die von 45-Fuß-Containern zur Anlage.

Auch sind in der Figur 3 Längs-Sicherungselemente 16a, 16b an zwei verschiedenen Orten in Längsrichtung des Hubtisches 7b gesehen dargestellt. Die Längs-Sicherungselemente 16a, 16b befinden sich jeweils in der Nähe der vorderen und hinteren Stirnfläche 7c des Hubtisches 7b und ragen in der Ruhestellung und auch in der Betriebsstellung aus der Oberfläche 7d des zweiten Hubtisches 7b heraus. Die in Längsrichtung des Hubtisches 7b und ausgehend von den End-Sicherungselementen 14 gesehen vorderen Längs-Sicherungselemente 16a dienen zur Sicherung eines 40-Fuß-Containers 5 und die in Längsrichtung des Hubtisches 7b und ausgehend von den End-Sicherungselementen 14 hinteren Längs-Sicherungselemente 16b dienen zur Sicherung eines 20-Fuß-Containers 5. Das andere Ende des 20-Fuß-Containers 5 wird über die End-Sicherungselemente 14 gesichert. Für die Sicherung des anderen Endes des 40-Fuß-Containers 5 sind an dem ersten Hubtischs 7a spiegelverkehrt entsprechende Längs-Sicherungselemente 16a angeordnet.

Des Weiteren zeigt die Figur 3 drei Gruppen von Seiten-Sicherungselemente 15a, 15b, 15c, von denen jede Gruppe ein Paar von redundanten Seiten-Sicherungselementen 15a, 15b, 15c aufweist. Die Seiten-Sicherungselemente 15a, 15c, 15c ragen in ihrer Ruhestellung, d. h. es ist kein Container 5 auf dem Hubtisch 7 abgestellt, aus der Oberfläche 7d des Hubtisches 7 nach oben teilweise heraus. Ausgehend von den End-Sicherungselementen 14 und in Längsrichtung des Hubtisches 7 sind ein Paar vordere Seiten-Sicherungselementen 15a, ein Paar mittlere Seiten-Sicherungselemente 15bc und ein Paar hintere Seiten-Sicherungselementen 15c auf dem zweiten Hubtisch 7b angeordnet. In der Betriebstellung, d. h. es ist ein Container 5 auf dem Hubtisch 7 abgestellt, haben die Seiten-Sicherungselemente 15a, 15b, 15c die Funktion einer definierten Anschlagfläche für die Eckbeschläge 23a der Container 5 zur Verfügung zu stellen. Sollte ein Container 5 auf dem angehobenen Container 5 seitlich verrutschen, kommt der Eckbeschlag 23 des Containers 5 an dem Seiten-Sicherungselement 15a, 15b, 15c und verhindert somit ein weiteres Verrutschen. Entsprechender Weise sind daher die vorderen Seiten-Sicherungselementen 15a, die mittleren Seiten-Sicherungselemente 15b und die hinteren Seiten-Sicherungselemente 15c in Längsrichtung des Hubtisches 7b gesehen jeweils seitlich neben und nach innen versetzt zu den Eckbeschlägen 23 der zu transportierenden Container 5, die eine Länge von 20, 40 und 45 Fuß haben können, auf dem zweiten Hubtisch 7b angeordnet. Die vorderen Seiten-Sicherungselemente 15a dienen zur Sicherung der Eckbeschläge 23 eines 45-Fuß-Containers oder eines 20-Fuß-Containers, die mittleren Seiten-Sicherungselemente 15c zur Sicherung der Eckbeschläge 23 eines 40-Fuß-Containers und die hinteren Seiten-Sicherungselemente 15c zur Sicherung der Eckbeschläge 5a eines 20-Fuß-Containers. Die gegenüberliegenden Eckbeschläge 23 der 45-Fuß-Container oder der 40-Fuß-Container werden von vorderen Seiten-Sicherungselementen 15a und mittleren Seiten-Sicherungselementen 15b gesichert, die spiegelverkehrt auf dem ersten Hubtisch 7a angeordnet sind.

Die Figur 3 zeigt den zweiten Hubtisch 7b. Der erste Hubtisch 7a ist identisch jedoch seitenverkehrt aufgebaut, so dass die End-Sicherungselemente 14 für den 45-Fuß-Container 5 am weitesten voneinander entfernt sind.

Der zuvor erwähnte seitenverkehrte Aufbau ist auch gut aus der Figur 4 zu erkennen, die eine Draufsicht auf den ersten Hubtisch 7a zeigt. Hier sind die äußeren End-Sicherungselemente 14 entsprechend an der äußeren Seitenfläche 7e des ersten Hubtisches 7a und in der Figur 4 im linken Bereich wieder zu finden. In Bezug auf die die vorderen Seiten-Sicherungselementen 15a, die mittleren Seiten-Sicherungselemente 15b und die hinteren Seiten-Sicherungselemente 15c ist zu erkennen, dass diese jeweils angrenzend zur Seitenfläche 7e des ersten Hubtisch 7a angeordnet sind, um im Betriebszustand in der Nähe der Eckbeschläge 23 des Containers 5 zu sein.

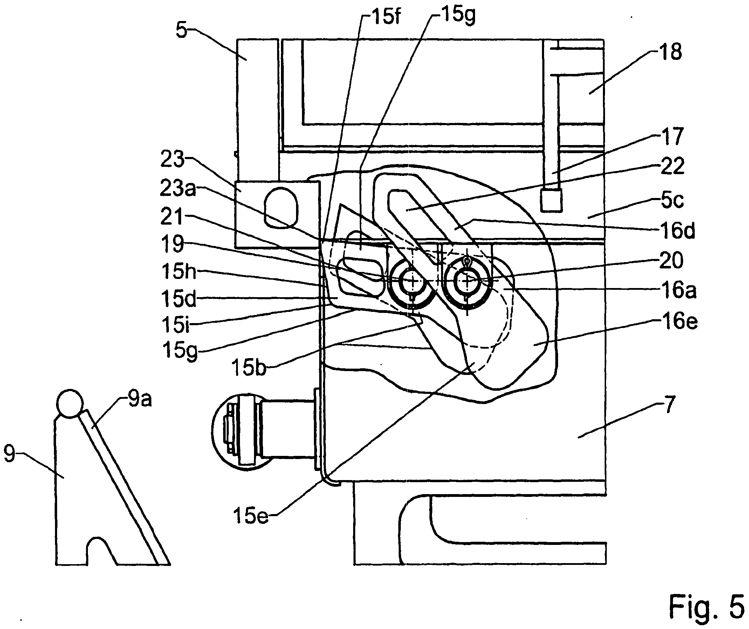

In der Figur 5 ist eine Ausschnittsvergrößerung von Figur 2 aus dem Bereich des Hubtisches 7b und des darauf abgestellten Containers 5 dargestellt, wobei die den Container 5 ein sicherndes mittleres Seiten-Sicherungselement 15b und ein sicherndes vorderes Längs-Sicherungselement 16a im Aufriss gezeigt sind. Alle Seiten-Sicherungselemente 15a, 15b und 15c sowie Längs-Sicherungselemente 16a, 16b sind als Doppelhebel aus einen Stahlblechstreifen mit einem Sicherungsteil 15d, 16d und einem Gewichtsteil 15e, 16e ausgebildet. Etwa in der mit Mitte ist jedes Seiten-Sicherungselement 15a, 15b und 15c sowie Längs-Sicherungselement 16a, 16b um eine Achse 19, 20 schwenkbar gelagert. Die Achsen 19, 20 sind hierbei parallel zur Oberfläche 7d sowie in Längsrichtung des ersten Hubtisches 7a ausgerichtet und unterhalb der Oberfläche 7d des ersten Hubtisches 7a angeordnet. Die Sicherungsteile 15d, 16d haben eine zentrale Öffnung 21, 22, um diese leichter als das Gewichtsteil 15e, 16e auszugestalten. Außerdem ist das flache Sicherungsteil 15d des Seiten-Sicherungselementes 15a, 15b, 15c spitz zu laufend.

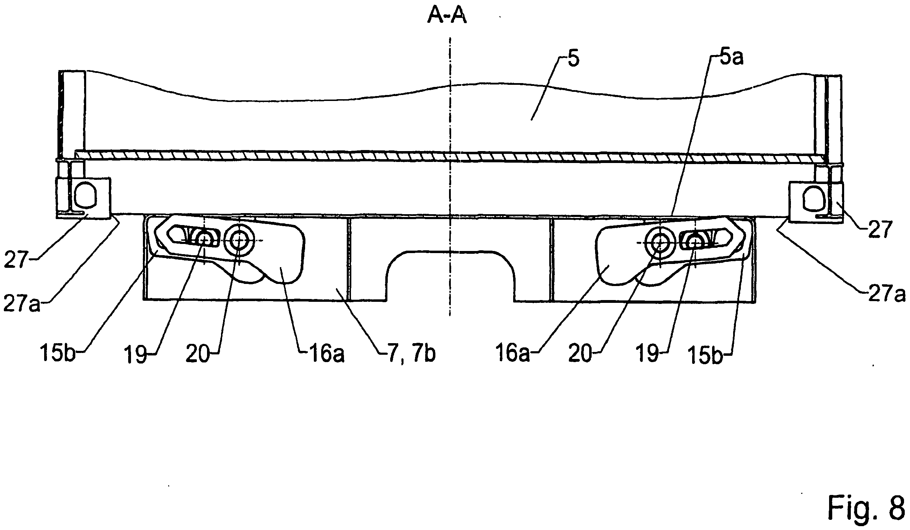

Die Längs-Sicherungselemente 16a, 16b sind in der Weise ausbalanciert, dass in der Ruhestellung, d. h. es ist kein Container 5 auf dem Hubtisch 7 abgestellt, und in der Betriebsstellung, d. h. es ist ein Container 5 mit seiner Stirnfläche 7c an die Längs-Sicherungselemente 16a, 16b angrenzend auf dem Hubtisch 7 abgestellt, das Sicherungsteil 16e etwa unter einem Winkel von 45 Grad aus der Oberfläche 7d des Hubtisches 7b herausragt. Der Winkel von 45 Grad wurde gewählt, damit der Sicherungsteil mit einer ausreichenden Länge aus der Oberfläche 7d des ersten Hubtisches 7a heraus ragt, um den Container 5 an seiner Stirnfläche 7c gegen Verrutschen zu sichern. Außerdem können sich die Längs-Sicherungselemente 16a, 16b in einer dritten Stellung und zwar einer Passivstellung befinden, d. h. ein Container 5 steht auf dem Längs-Sicherungselemente 16a und schwenkt diesen entgegen der Gewichtskraft des Gewichtsteils 16e in den Hubtisch 7a hinein (siehe Figur 8).

Auch ist es möglich, dass die Längs-Sicherungselemente 16a, 16b in der Betriebsstellung von den Verriegelungselementen 17 leicht in Richtung der Oberfläche 7d des Hubtisches 7 gedrückt werden, aber weiterhin ausreichend, beispielsweise unter einem Winkel von 30 Grad, aus der Oberfläche 7d des Hubtisches 7 heraus ragen.

Die Seiten-Sicherungselemente 15a, 15b und 15c sind anders als die Längs-Sicherungselemente 16a, 16b ausbalanciert, so dass diese in der Ruhestellung unter einem Winkel von 30 Grad aus der Oberfläche 7d des Hubtisches 7b herausragen. In der Betriebsstellung werden die Seiten-Sicherungselemente 15a, 15b und 15c von der Unterfläche 5a des Containers 5 nach unten in die Oberfläche 7d des Hubtisches 7 geschwenkt. In der Betriebstellung ist die Längsachse des Sicherungsteils 15e unter einem Winkel von etwa 5 Grad zur Oberfläche 7d des Hubtisches 7 angeordnet. Das Sicherungsteil 15e ist in der Art ausgebildet, dass es eine Kante 15f aufweist, die in Längsrichtung des Hubtisches 7 und parallel zur Achse 19 verläuft und sich über die gesamte Breite des Sicherungsteils 15e erstreckt. Die Kante 15f ist an dem der Achse 19 abgewandten Ende des Sicherungsteils 15e angeordnet. In Längsrichtung des Hubtisches 7 gesehen hat das Sicherungsteils 15e eine parallelogrammartige Form. Es weist also zwei zueinander parallele Längsseiten 15g auf, die an dem der Achse 19 abgewandten Ende über eine Stirnseite 15h miteinander verbunden sind. Im Bereich der spitzwinkligen Kante 15f ist der von der einen Längsseite 15 und der Stirnseite 15 etwa 75 Grad. Entsprechender Weise ist der Winkel zwischen der Längsseite 15g und der Stirnseite 15h in Bezug auf die abgerundete Ecke 15i etwa 105 Grad.

In der Figur 5 ist der Container 5 nicht in seiner normalen Transportstellung gezeigt sondern in einer seitlich in Richtung des Hubtisches 7 verrutschten Stellung, um die Funktion der Seiten-Sicherungselemente 15a, 15b, 15c näher zu erläutern. In der Betriebsstellung ragen die Seiten-Sicherungselemente 15a, 15b, 15c mit ihren Kanten 15f leicht aus dem Hubtisch 7 hervor, da deren Längskante 7f abgerundet ist und die Kanten 15f spitzwinklig ist. Ein Container 5, der auf dem Hubtisch 7 seitlich verrutscht, kommt mit seiner Innenfläche 23a des würfelförmigen Eckbeschlages 23 zur Anlage an der Kante 15f des Seiten-Sicherungselementes 15a, 15b, 15c und wird somit aufgehalten. Die Innenfläche 23a entsteht dadurch, dass der Eckbeschlag 23 leicht aus der Unterseite 5a des Containers 5 heraus ragt.

Des Weiteren ist von Vorteil, dass die Seiten-Sicherungselemente 15a, 15b, 15c schwenkbar an dem Hubtisch 7 gelagert sind und somit der Kontakt der Innenfläche 23a mit der Kante 15f der Seiten-Sicherungselemente 15a, 15b, 15c zu einem Aufstellen des Seiten-Sicherungselementes 15a, 15b, 15c und somit zu einer Verbesserung der Anlage der Kante 15f an der Innenfläche 23a.

Außerdem ist der Figur 5 zu entnehmen, dass die Seiten-Sicherungselemente 15a, 15b, 15c jeweils redundant als Paare auf einer gemeinsamen Achse 19 angeordnet sind. Um dies zu verdeutlichen, ist das hintere Seiten-Sicherungselemente 15a, 15b, 15c in seiner Ruhestellung dargestellt. Diese Position kann das zweite Seiten-Sicherungselement 15a, 15b, 15c eines Paares einnehmen, wenn die Unterfläche 5a des Containers 5 nicht dargestellte Sicken oder Quervertiefungen aufweist und somit nicht nach unten in Richtung der Oberfläche 7d des Hubtisches 7 gedrückt wird. Die Sicherungsfunktion bleibt erhalten, da das Sicherungsteil 15e auch zur Anlage an der Innenseite 23a des Eckbeschlages 23 kommt, wobei der Eckbeschlag 23 des Containers 5 leicht auf die abgerundete Kante des Hubtisches 7 aufrutschen muss.

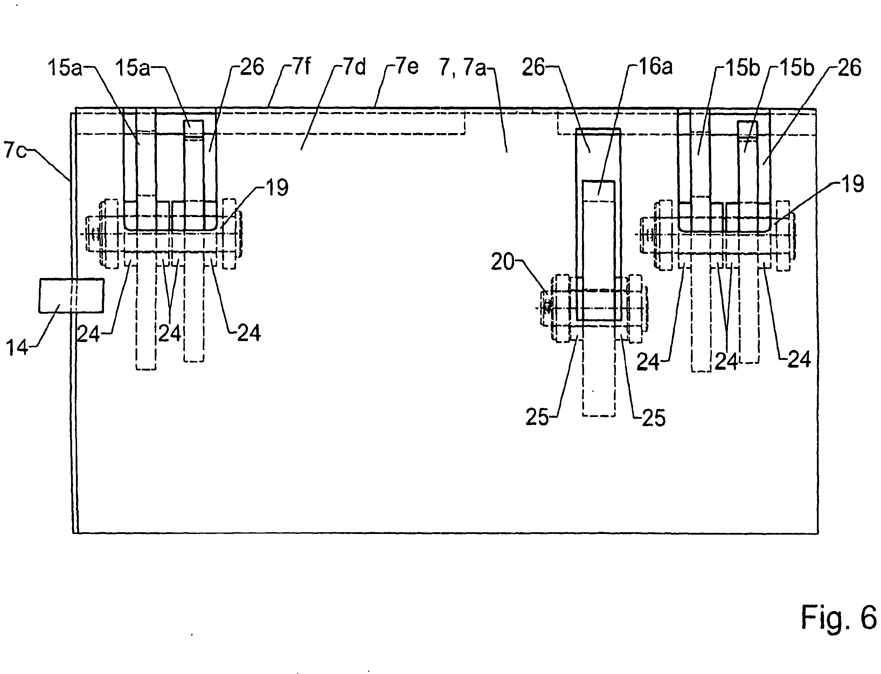

Die Figur 6 zeigt eine Vergrößerung der linken oberer Ecke des Hubtisches 7 nach Figur 5. Es ist ersichtlich, dass die der Paare von Seiten-Sicherungselemente 15a, 15b in Längsrichtung des Hubtisches 7 gesehen auf einer gemeinsamen Achse 19 schwenkbar sowie hintereinander und mit geringem Abstand zueinander gelagert sind. Wie in der Figur 5 ist das jeweils erste der beiden Seiten-Sicherungselemente 15a, 15b, dass jeweils näher zu dem End-Sicherungselement 14 angeordnet ist, in der Betriebsstellung dargestellt und das zweite in der Ruhestellung. Daher erscheint das zweite Seiten-Sicherungselement 15a, 15b kürzer als das erste, obwohl beide identisch ausgebildet sind. Auch ist ersichtlich, dass das End-Sicherungselement 14 und das Längssicherungselement 16 relativ zu den zugeordneten Seiten-Sicherungselemente 15a, 15b sich in einer ähnlichen Position befinden.

Auch zeigt die Figur 6, dass die Achsen 19, 20 für die Lagerung der Seiten-Sicherungselemente 15a, 15b, 15c und der Längs-Sicherungselemente 16a, 16b über Laschen 23, 24 an der Unterseite der Oberfläche 7d des Hubtisches 7 befestigt sind. Des Weiteren ist zu erkennen, dass in der Oberfläche 7d des Hubtisches 7 rechteckige Öffnungen 26 angeordnet sind, durch die die Seiten-Sicherungselemente 15a, 15b, 15c und die Längs-Sicherungselemente 16a, 16b aus der Oberfläche 7d des Hubtisches 7 hinaus ragen oder in diesen hinein tauchen.

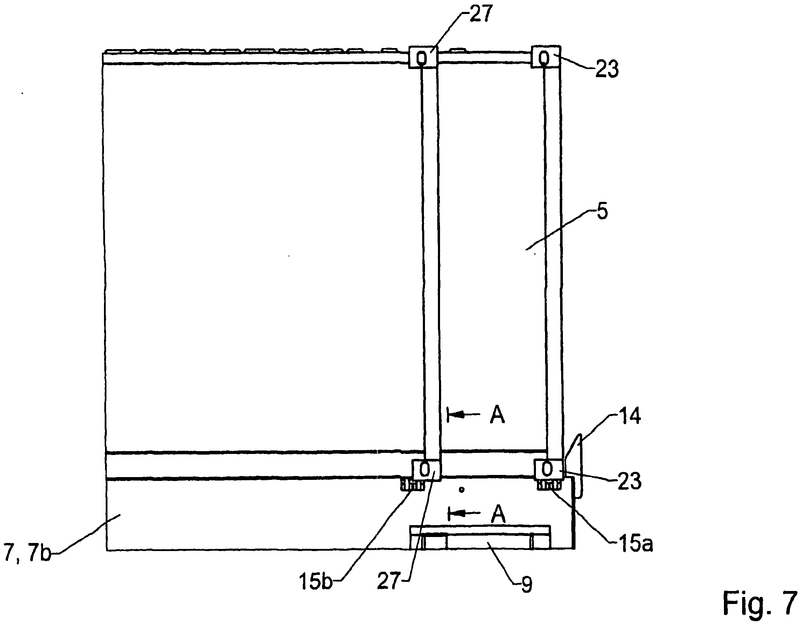

In der Figur 7 ist eine Seitenansicht eines Endbereichs eines 45-Fuß-Containers 5 auf dem Hubtisch 7 gezeigt. Der 45-Fuß-Container 5 hat in üblicher Weise Eckbeschläge 23 und zusätzliche Eckbeschläge 27 im Bereich der Länge eines 40-Fuß-Containers 5. Die mittleren Seiten-Sicherungselemente 15b und vorderen Längs-Sicherungselemente 16a, 16b sind von den Eckbeschlägen 27 des 45-Fuß-Containers 5 beziehungsweise der angrenzenden Unterfläche 5a nach unten gedrückt und behindern somit die Aufnahme und den Transport des Containers 5 nicht. Einer der beiden mittleren Seiten-Sicherungselemente 15b befindet sich zusätzlich zu den vorderen Seiten-Sicherungselementen 15a in einer Position, bei einem Verrutschen des Containers 5, diesen durch Anlage an der Innenfläche 27a des Eckbeschlages 27 zu sichern.

Die Figur 8 zeigt eine Schnittansicht von Figur 7 entlang der Schnittlinie A-A. Diese Figur zeigt klar, dass die mittleren Seiten-Sicherungselemente 15b und die vorderen Längssicherungselemente 16a von der Unterfläche 5a des Containers 5 nach unten geschwenkt werden.

Unter dem Begriff Container 5 werden im Sinne der Erfindung ISO-Container und/oder Wechselbehälter verstanden. Wichtig und vorteilhaft im Zusammenhang mit der vorliegenden Erfindung ist auch, dass die Seiten-Sicherungselemente 15a, 15b, 15c und die Längs-Sicherungselemente 16a, 16b nicht anzutreiben sind sondern allein durch das jeweilige Gewicht 15e und 16e beziehungsweise den hierauf abgestellten Container 5 bewegt werden.

### Bezugszeichenliste

- 1: automatisch geführtes Fahrzeug
- 1 a: Reifen
- 2: Übergabestation
- 3: Traggestell
- 3a: Beine
- 3b: Tragschiene
- 3c: Endfläche
- 3d: Tragfläche
- 4: Boden
- 5: Container
- 5a: Unterfläche
- 5b: Längsseite
- 5b: Stirnseite
- 6: Einfahrkanal
- 7: Hubtisch
- 7a: erster Hubtisch
- 7b: zweiter Hubtisch
- 7c: Stirnfläche
- 7d: Oberfläche
- 7e: Seitenfläche
- 7f: Längskante
- 8: Fahrzeugrahmen
- 9: Führungselement
- 9a: Führungsfläche
- 10: Hubantrieb
- 11: Antriebsmotor
- 12a, 12b: Stellspindelantrieb
- 13a, 13b: Kniehebel
- 14: End-Sicherungselemente
- 15a: vordere Seiten-Sicherungselemente
- 15c: mittlere Seiten-Sicherungselemente
- 15c: hintere Seiten-Sicherungselemente
- 15d: Sicherungsteil
- 15e: Gewichtsteil
- 15f: Kante
- 15g: Längsseite
- 15h: Stirnseite
- 15i: Ecke
- 16a: vordere Längs-Sicherungselemente
- 16b: hintere Längs-Sicherungselemente
- 16d: Sicherungsteil
- 16e: Gewichtsteil
- 17: Verriegelungselement
- 18: Tür
- 19: Achse
- 20: Achse
- 21: Öffnung
- 22: Öffnung
- 23: Eckbeschlag
- 23a: Innenfläche
- 24: Lasche
- 25: Lasche
- 26: Öffnungen
- 27: Eckbeschlag
- 27a: Innenseite

- a: Abstand
- b: Breite
- c: Breite
- d: Abstand
- e: Abstand
- F: Fahrtrichtung
- f: Breite

## Patentansprüche

1. Vorrichtung zum Sichern eines Containers (5) auf einer Plattform (7, 7a, 7b) eines Transportfahrzeugs, insbesondere auf einer Hub-Plattform eines flurgebundenen und automatisch geführten Transportfahrzeuges (1), mit Sicherungselementen (15a, 15b, 15c, 18a, 16b), die sich an der Plattform (7, 7a, 7b) abstutzen und für die Sicherung an dem Container (6) anliegen, wobei eine Vielzahl von Sicherungsalementen (15a, 15b, 15c, 16a, 16b) derart beweglich an der Plattform (7, 7a, 7b) angeordnet sind, dass je nach Position und Art eines auf der Plattform (7, 7a, 7b) abgestellten Containers (5) eine erste Gruppe der Vielzahl der Sicherungselemente (15a, 15b, 15c, 18a, 16b) von dem Container (5) in eine Passivstellung bewegt werden und eine zweite Gruppe der Vielzahl der Sicherungselemente (15a, 15b, 15c, 16a. 16b) von dem Container (5) in eine Betriebstellung bewegt wird oder in der Betriebstellung verbleibt, in der die zweite Gruppe der Sicherungselemente (15a, 15b, 15c, 18a, 16b) den Container (5) gegen Herunterrutschen von der Plattform (7, 7a, 7b) sichert, **dadurch gekennzeichnet, dass** die Sicherungselemente (15a, 15b, 15c, 16a, 16b) zwischen einer Betriebsstellung, einer Ruhestellung und einer Passivstellung schwenkbar an der Plattform (7, 7a, 7b) gelagert sind und in der Passivstellung von einer Unterfläche (5a) des Containers (5), vorzugsweise bündig mit der Oberfläche (7d) der Plattform (7, 7a, 7b) abschließend, in Richtung der Plattform (7, 7a, 7b) geschwenkt sind, dass die Sicherungselemente (15a, 15b, 15c, 16a, 18b) über Achsen (19, 20) schwenkbar an der Plattform (7, 7a, 7b) gelagert und die Achsen (19, 20) in Längsrichtung der Plattform (7, 7a, 7b) und parallel zu sowie unterhalb der Oberfläche (7d) der Plattform (7, 7a, 7b) angeordnet sind und dass die Sicherungselemente (15a, 13b, 15c, 16a, 18b) als Doppelhebel mit einem Slcherungsteil (15d, 16d) und einem Gewichtsteil (15e, 16e) ausgebildet sind, die in der Mitte ah den Achsen (19, 20) gelagert sind.

2. Vorrichtung nach Anspruch 1, **dadurch gekennzeichnet, dass** die Gewichtsteile (15e, 16e) derart dimensioniert sind, dass in einer Ruhestellung der Sicherungselemente (15a, 15b, 15c, 16a, 16b), in der kein Container (5) auf der Plattform (7) abgestellt ist, die Sicherungselemente (15a, 15b, 15c, 18a, 16b) mit einem Teil seines Sicherungsteils (15d, 16d) aus der Oberfläche (7d) der Plattform (7, 7a, 7b) in Richtung eines hierauf abzustellenden Containers (5) hinausragen.

3. Vorrichtung nach Anspruch 1 oder 2, **dadurch gekennzeichnet, dass** die Sicherungselemente als Seiten-Sicherungselemente (15a, 15b, 15c) und Längs-Sicherungselemente (16a, 16b) ausgebildet sind, die Langs-Sicherungselemente (16a, 16b) in ihrer Betriebstellung an einer Stirnseite (5b) eines in Längsrichtung der Plattform (7, 7a, 7b) verrutschten Container (5) zur Anlage kommen, und die Seiten. Sicherungselemente (16a, 16b) in ihrer Betriebstellung an einer Innenseite (23a, 27a) eines Eckbeschlages (23, 27) eines quer zur Längsrichtung der Plattform (7, 7a, 7b) verrutschten Container (5) zur Anlage kommen.

4. Vorrichtung nach Anspruch 3, **dadurch gekennzeichnet, dass** die Längs-Sicherungselemente (16a, 16b) leistenartig mit einer Spitze ausgebildet sind.

5. Vorrichtung nach Anspruch 3 **dadurch gekennzeichnet, dass** die Seiten-Sicherungselemente (15a, 15b, 15c) leistenartig ausgebildet sind und an ihren der Achse (19) abgewandten Ende eine Kante (15f) aufweisen, die in der Betriebsstellung der Seiten-Sicherungselemente (15a, 16b, 15c) seitlich leicht aus der Plattform (7, 7a, 7b) und auf der Höhe der Oberfläche (7d) der Plattlorm (7, 7a, 7b) heraus steht

6. Vorrichtung nach Anspruch 5, **dadurch gekennzeichnet, dass** das Sicherungsteil (15d) in Richtung der Achse (19) gesehen eine parallelogrammartige Form aufweist, deren dem abzustellenden Container (5) zugewandte Längseite (15g) und die der Achse (19) abgewandte Stirnseite (15h) stumpfwinklig aufeinander zulaufen und die Kante (15f) ausbilden.

7. Vorrichtung nach einem der Ansprüche 3 bis 6, **dadurch gekennzeichnet, dass** die Seiten-Sicherungselemente (15a, 15b, 15c) In mehren Gruppen derart auf der Plattform (7, 7a, 7b) verteilt sind, dass Container (5) verschiedener Größen jeweils im Bereich ihrer Eckbeschläge (23) sicherbar sind.

8. Vorrichtung nach einem der Ansprüche 3 bis 7, **dadurch gekennzeichnet, dass** die Seiten-Sicherungselemente (15a, 15b, 18c) redundant als Paar in Bezug auf einen zu sichernden Eckbeschlag (23) angeordnet sind.

9. Vorrichtung nach einem der Ansprüche 3 bis 8, **dadurch gekennzeichnet, dass** die Längs-Sicherungselemente (16a, 16b) in mehren Gruppen derart auf der Plattform (7, 7a, 7b) verteilt sind, dass Container (5) verschiedener Größen jewells im Bereich ihrer Stirnseiten (5b) sicherbar sind.

10. Vorrichtung nach einem der Ansprüche 3 bis 9, **dadurch gekennzeichnet, dass** im Bereich der Stirnfläche der Plattform (7, 7a, 7b) stame End-Sicherungselemente (14a, 14b) angeordnet sind.

11. Vorrichtung nach einem der Ansprüche 1 bis 10, **dadurch gekennzeichnet, dass** die Plattform (7, 7a, 7b) in deren Längsrichtung in zwei Plattformen (7a, 7b) geteilt ist und die Sicherungselemente (16a, 15b, 15c, 16a, 16b) zueinander spiegelverkehrt auf den jeweiligen Plattformen (7a, 7b) angeordnet sind.

12. Vorrichtung nach einem der Ansprüche 1 bis 11, **dadurch gekennzeichnet, dass** die Breite (c) der Plattform (7, 7a, 7b) kleiner als die Breite (f) des Containers (5) ist.

## Claims

1. Arrangement for securing a container (5) on a platform (7, 7a, 7b) of a transporter vehicle, and in particular on a lifting platform of an automatically guided, ground-travelling, transporter vehicle (1), having securing members (15a, 15b, 15c, 16a, 16b) which are supported on the platform (7, 7a, 7b) and which rest against the container (5) to perform the securing, a plurality of securing members (15a, 15b, 15c, 16a, 16b) being arranged on the platform (7, 7a, 7b) to be movable in such a way that, depending on the position and nature of a container (5) parked on the platform (7, 7a, 7b), a first group of the plurality of securing members (15a, 15b, 15c, 16a, 16b) are moved by the container (5) into a passive position and a second group of the plurality of securing members (15a, 15b, 15c, 16a, 16b) are moved by the container (5) into an operating position in which the second group of securing members (15a, 15b, 15c, 16a, 16b) secure the container (5) against slipping down off the platform (7, 7a, 7b), or remain in this operating position, **characterised in that** the securing members (15a, 15b, 15c, 16a, 16b) are mounted on the platform (7, 7a, 7b) to be pivotable between an operating position, a rest position and a passive position and in the passive position have been pivoted by a bottom face (5a) of the container (5) towards the platform (7, 7a, 7b), preferably to be flush with the surface (7b) of the platform (7, 7a, 7b), **in that** the securing members (15a, 15b, 15c, 16a, 16b) are pivotably mounted on the platform (7, 7a, 7b) by means of shafts (19, 20) and the shafts (19, 20) are arranged in the longitudinal direction of the platform (7, 7a, 7b) and parallel to and below the surface (7d) of the platform (7, 7a, 7b), and **in that** the securing members (15a, 15b, 15c, 16a, 16b) take the form of two-armed levers, having a securing portion (15d, 16d) and a weighting portion (15e, 16e), which are mounted at their centres on the shafts (19, 20).

2. Arrangement according to claim 1, **characterised in that** the weighting portions (15e, 16e) are sized in such a way that, when the securing members (15a, 15b, 15c, 16a, 16b) are in a rest position in which a container (5) is not parked on the platform (7), part of the securing portions (15d, 16d) of the securing members (15a, 15b, 15c, 16a, 16b) projects from the surface (7d) of the platform (7, 7a, 7b) in the direction of a container (5) to be parked thereon.

3. Arrangement according to claim 1 or 2, **characterised in that** the securing members take the form of lateral securing members (15a, 15b, 15c) and longitudinal securing members (16a, 16b), the longitudinal securing members (16a, 16b) come into abutment, in their operating position, against an end-face (5b) of a container which has slipped in the longitudinal direction of the platform (7, 7a, 7b), and the lateral securing members (16a, 16b) come into abutment, in their operating position, against an inner face (23a, 27a) of a corner fitting (23, 27) of a container (5), which latter has slipped transversely to the longitudinal direction of the platform (7, 7a, 7b).

4. Arrangement according to claim 3, **characterised in that** the longitudinal securing members (16a, 16b) are of a strip-like form having a point.

5. Arrangement according to claim 3, **characterised in that** the lateral securing members (15a, 15b, 15c) are of a strip-like form and have, at their ends remote from the shafts (19), an edge (15f) which, at the level of the surface (7d) of the platform (7, 7a, 7b), projects slightly from the platform (7, 7a, 7b) in a lateral position when the lateral securing members (15a, 15b, 15c) are in the operating position.

6. Arrangement according to claim 5, **characterised in that**, looking in the direction defined by the shaft (19), the securing portion (15d) is of a parallelogram-like form, whose longitudinal side (15g) adjacent the container (5) to be parked and whose end face (15h) remote from the shaft (19) taper towards one another at an obtuse angle and form the edge (15f).

7. Arrangement according to one of claims 3 to 6, **characterised in that** the lateral securing members (15a, 15b, 15c) are so distributed on the platform (7, 7a, 7b), in a plurality of groups, that containers (5) of different sizes can each be secured in the region of their corner fittings (23).

8. Arrangement according to one of claims 3 to 7, **characterised in that** the lateral securing members (15a, 15b, 15c) are arranged as pairs of mutually redundant members relative to corner fittings (23) to be secured.

9. Arrangement according to one of claims 3 to 8, **characterised in that** the longitudinal securing members (16a, 16b) are distributed on the platform (7, 7a, 7b) in a plurality of groups in such a way that containers (5) of different sizes can each be secured in the region of their end-faces (5b).

10. Arrangement according to one of claims 3 to 9, **characterised in that** rigid end securing members (14a, 14b) are arranged in the region of the end-face of the platform (7, 7a, 7b).

11. Arrangement according to one of claims 1 to 10, **characterised in that** the platform (7, 7a, 7b) is divided in its longitudinal direction into two platforms (7a, 7b) and the securing members (15a, 15b, 15c, 16a, 16b) are arranged on the respective platforms (7a, 7b) in mirror inversion to one another.

12. Arrangement according to one of claims 1 to 11, **characterised in that** the width (c) of the platform (7, 7a, 7) is less than the width (f) of the container (5).

## Revendications

1. Dispositif de sécurisation d'un conteneur (5) sur une plate-forme (7, 7a, 7b) d'un véhicule de transport, notamment sur une plate-forme autoélévatrice d'un véhicule de transport (1) au sol guidé automatiquement, ledit dispositif comportant des éléments de sécurisation (15a, 15b, 15c, 16a, 16b) qui s'appuient sur la plate-forme (7, 7a, 7b) et qui portent contre le conteneur (5) pour le sécuriser, une pluralité d'éléments de sécurisation (15a, 15b, 15c, 16a, 16b) étant disposés de façon mobile au niveau de la plate-forme (7, 7a, 7b) de sorte que, en fonction de la position et du type de conteneur (5) posé sur la plate-forme (7, 7a, 7b), un premier groupe de la pluralité d'éléments de sécurisation (15a, 15b, 15c, 16a, 16b) est déplacé par le conteneur (5) dans une position passive et un deuxième groupe de la pluralité d'éléments de sécurisation (15a, 15b, 15c, 16a, 16b) est déplacé par le conteneur (5) dans une position de fonctionnement ou maintenu dans la position de fonctionnement dans laquelle le deuxième groupe d'éléments de sécurisation (15a, 15b, 15c, 16a, 16b) sécurise le conteneur (5) pour l'empêcher de glisser et de tomber de la plate-forme (7, 7a, 7b), **caractérisé en ce que** les éléments de sécurisation (15a, 15b, 15c, 16a, 16b) sont montés sur la plate-forme (7, 7a, 7b) de façon à pouvoir pivoter entre une position de fonctionnement, une position de repos et une position passive et, dans la position passive, sont pivotés en direction de la plate-forme (7, 7a, 7b) depuis une surface inférieure (5a) du conteneur (5), de préférence à fleur de la surface supérieure (7d) la plate-forme (7, 7a, 7b), **en ce que** les éléments de sécurisation (15a, 15b, 15c, 16a, 16b) sont montés sur la plate-forme (7, 7a, 7b) de façon à pouvoir pivoter par le biais d'axes (19, 20) et les axes (19, 20) sont disposés dans la direction longitudinale de la plate-forme (7, 7a, 7b) et parallèlement à la surface supérieure (7d) de la plate-forme (7, 7a, 7b) et ainsi qu'au-dessous de celle-ci et **en ce que** les éléments de sécurisation (15a, 15b, 15c, 16a, 16b) sont conformés en double levier comportant une partie de sécurisation (15d, 16d) et une partie pesante (15e, 16e) qui sont montées au milieu sur des axes (19, 20).

2. Dispositif selon la revendication 1, **caractérisé en ce que** les parties pesantes (15e, 16e) sont dimensionnées de telle sorte que, lorsque les éléments de sécurisation (15a, 15b, 15c, 16a, 16b) sont dans une position de repos dans laquelle aucun conteneur (5) n'est posé sur la plate-forme (7), les éléments de sécurisation (15a, 15b, 15c, 16a, 16b) font saillie, au niveau d'une portion de leur partie de sécurisation (15d, 16d), de la surface supérieure (7d) de la plate-forme (7, 7a, 7b) en direction du conteneur (5) à poser par-dessus.

3. Dispositif selon la revendication 1 ou 2, **caractérisé en ce que** les éléments de sécurisation sont conformés en éléments de sécurisations latéraux (15a, 15b, 15c) et en éléments de sécurisation longitudinaux (16a, 16b), les éléments de sécurisations longitudinaux (16a, 16b) viennent se placer, dans leur position de fonctionnement, contre le côté frontal (5b) d'un conteneur (5) qui a été glissé dans la direction longitudinale de la plate-forme (7, 7a, 7b), et les éléments de sécurisation latéraux (16a, 16b) viennent se placer, dans leur position de fonctionnement, contre un côté intérieur (23a, 27a) d'une ferrure d'angle (23, 27) d'un conteneur (5) qui a été glissé transversalement à la direction longitudinale de la plate-forme (7, 7a, 7b).

4. Dispositif selon la revendication 3, **caractérisé en ce que** les éléments de sécurisation longitudinaux (16a, 16b) sont conformés en baguette dotée d'une pointe.

5. Dispositif selon la revendication 3, **caractérisé en ce que** les éléments de sécurisation latéraux (15a, 15b, 15c) sont conformés en baguette et comportent à leur extrémité opposée à l'axe (19) une arête (15f) qui fait légèrement saillie latéralement de la plate-forme (7, 7a, 7b) et à hauteur de la surface supérieure (7d) de la plate-forme (7, 7a,7b) lorsque les éléments de sécurisation latéraux (15a, 15b, 15c) sont dans la position de fonctionnement.

6. Dispositif selon la revendication 5, **caractérisé en ce que** la partie de sécurisation (15d) a, lorsque l'on regarde en direction de l'axe (19), une forme de parallélogramme dont le côté longitudinal (15g) qui est dirigé vers le conteneur (5) à poser et le côté frontal (15h) opposé à l'axe (19) convergent suivant un angle obtus et forment l'arête (15f).

7. Dispositif selon l'une des revendications 3 à 6, **caractérisé en ce que** les éléments de sécurisation latéraux (15a, 15b, 15c) sont distribués en plusieurs groupes sur la plate-forme (7, 7a, 7b) de sorte que des conteneurs (5) de différentes dimensions peuvent être sécurisés au niveau de leurs ferrures d'angle (23).

8. Dispositif selon l'une des revendications 3 à 7, **caractérisé en ce que** les éléments de sécurisation latéraux (15a, 15b, 15c) sont disposés de façon redondante par paire par rapport à une ferrure d'angle (23) à sécuriser.

9. Dispositif selon l'une des revendications 3 à 8, **caractérisé en ce que** les éléments de sécurisation longitudinaux (16a, 16b) sont distribués en plusieurs groupes sur la plate-forme (7, 7a, 7b) de sorte que des conteneurs (5) de différentes dimensions peuvent être sécurisés au niveau de leurs côtés frontaux (5b).

10. Dispositif selon l'une des revendications 3 à 9, **caractérisé en ce que** des éléments de sécurisation d'extrémité (14a, 14b) immobiles sont disposés au niveau des faces frontales de la plate-forme (7, 7a, 7b).

11. Dispositif selon l'une des revendications 1 à 10, **caractérisé en ce que** la plate-forme (7, 7a, 7b) est divisée dans sa direction longitudinale en deux plates-formes (7a, 7b) et les éléments de sécurisation (15a, 15b, 15c, 16a, 16b) sont disposés en symétrie inverse sur les plates-formes (7a, 7b) correspondantes.

12. Dispositif selon l'une des revendications 1 à 11, **caractérisé en ce que** la largeur (c) de la plate-forme (7, 7a, 7b) est inférieure à la largeur (f) du conteneur (5).
